# EUROPÄISCHE PATENTSCHRIFT

(11) **EP 3 890 941 B1**
(45) Veröffentlichungstag und Bekanntmachung des Hinweises auf die Patenterteilung: **01.03.2023**
(21) Anmeldenummer: 19827632.1
(22) Anmeldetag: 06.12.2019
(51) Int. Cl.: B29C 49/64, B29C 49/06, B29C 49/68, B29K 67/00, B29L 31/00

(54) **TEMPERIERUNGSEINRICHTUNG UND BEHÄLTERHERSTELLUNGSMASCHINE**
TEMPERATURE CONTROL DEVICE AND CONTAINER PRODUCTION MACHINE
DISPOSITIF DE THERMORÉGULATION ET MACHINE DE PRODUCTION DE RÉCIPIENTS

(30) Priorität: 07.12.2018 DE 102018131464
(43) Veröffentlichungstag der Anmeldung: 13.10.2021
(73) Patentinhaber: KHS GmbH, 44143 Dortmund (DE)
(72) Erfinder: LEWIN, Frank, 22889 Tangstedt (DE); ULUTÜRK, Deniz, 22761 Hamburg (DE); WIESE, Arne-Fritz, 22926 Ahrensburg (DE); KLATT, Dieter, 22147 Hamburg (DE); MÜNDEL, Christian, 22949 Ammersbek (DE); FIRCHAU, Daniel, 23911 Schmilau (DE); BALKAU, Karl-Heinz, 22113 Oststeinbek (DE)
(74) Vertreter: Haarpatent Patentanwälte Krämer Meyer
(86) Internationale Anmeldenummer: PCT/EP2019/084012
(87) Internationale Veröffentlichungsnummer: WO 2020/115290

(56) Entgegenhaltungen:
- DE-A1-102016 005 273
- US-A1- 2007 224 307
- US-A1- 2016 368 197
- US-A1- 2018 029 283

## Beschreibung

Die Erfindung betrifft eine Temperierungseinrichtung zur thermischen Konditionierung von Vorformlingen aus einem thermoplastischen Material für eine anschließende Umformung umfassend eine Transporteinrichtung nach dem Rundläuferprinzip zum Transport der Vorformlinge entlang einer Transportstrecke, wobei die Transportstrecke wenigstens einen Abschnitt mit zwei nebeneinanderliegenden Transportgassen zum Transport der Vorformlinge in zwei nebeneinanderliegenden Reihen aufweist, so dass jeder Vorformling einer der beiden Transportgassen zuordnen bar ist, wobei die Temperierungseinrichtung ferner zwischen den Transportgassen angeordnete Heizelemente zum Erwärmen der Vorformlinge umfasst, wobei die Heizelemente derart zwischen den Transportgassen angeordnet sind, dass jedes Heizelement auf Vorformlinge in beiden Transportgassen einwirkt.

Die Erfindung betrifft des Weiteren eine Behälterherstellungsmaschine zur Herstellung von Behältern aus Vorformlingen umfassend eine Temperierungseinrichtung zur thermischen Konditionierung von Vorformlingen aus einem thermoplastischen Material sowie eine Umformungseinrichtung zur Umformung der thermisch konditionierten Vorformlinge in Behälter.

Weit verbreitet sind herkömmliche Heizungen, bei denen die Vorformlinge in einem einreihigen kontinuierlichen Strom durch einen Heiztunnel transportiert werden, in dem die Vorformling mittels seitlich angeordneter Heizstrahler erwärmt werden. Dabei durchlaufen alle Vorformlinge den gleichen Transportpfad, wodurch automatisch sichergestellt wird, dass das Erwärmen bzw. thermische Konditionieren für alle Vorformlinge gleichartig erfolgt. Derartige Heizungen sind beispielsweise in US 2016 0368197 A1 oder US 2007 0224307 A1 beschrieben.

Die Erfindung betrifft demgegenüber eine Gattung neuartiger Heizsysteme, bei denen die Vorformlinge beidseitig der Heizstrahler in zwei Transportgassen transportiert werden. Eine gattungsgemäße Temperierungseinrichtung ist beispielsweise beschrieben in DE 10 2016 005 273 A1. Geeignete Transporteinrichtungen sind beispielsweise in DE 10 2016 007 850 A1 oder DE 10 2016 113 875 A1 beschrieben.

Auch bei diesen gattungsgemäßen Temperierungseinrichtungen mit zwei nebeneinander angeordneten Transportgassen wird eine thermische Gleichbehandlung aller Vorformlinge angestrebt. Auch bei symmetrischer Konstruktion der beiden Transportgassen hat sich jedoch gezeigt, dass bereits kleine Störungen, beispielsweise einseitige Verschmutzung von Reflektorkomponenten oder geringe Abweichungen in der Ausrichtung der Komponenten der Temperierungseinrichtung zueinander, eine thermische Ungleichbehandlung der Vorformlinge in den beiden Transportgasse verursachen können.

Der vorliegenden Erfindung liegt daher die Aufgabe zu Grunde, mit möglichst geringem Aufwand sicher zu stellen, dass die Vorformlinge trotz des Transportes durch verschieden Transportgassen soweit wie möglich einheitlich thermisch konditioniert werden.

Gemäß der Erfindung wird diese Aufgabe gelöst durch eine Temperierungseinrichtung zur thermischen Konditionierung von Vorformlingen aus einem thermoplastischen Material für eine anschließende Umformung umfassend eine Transporteinrichtung nach dem Rundläuferprinzip zum Transport der Vorformlinge entlang einer Transportstrecke, wobei die Transportstrecke wenigstens einen Abschnitt mit zwei nebeneinanderliegenden Transportgassen zum Transport der Vorformlinge in zwei nebeneinanderliegenden Reihen aufweist, so dass jeder Vorformling einer der beiden Transportgassen zuordnen bar ist, wobei die Temperierungseinrichtung ferner zwischen den Transportgassen angeordnete Heizelemente zum Erwärmen der Vorformlinge umfasst, wobei die Heizelemente derart zwischen den Transportgassen angeordnet sind, dass jedes Heizelement auf Vorformlinge in beiden Transportgassen einwirkt, wobei die erfindungsgemäße Temperierungseinrichtung dadurch weitergebildet ist, dass die Temperierungseinrichtung wenigstens eine Ausgleichsvorrichtung zum Ausgleich von Temperierungsunterschieden zwischen den den beiden Transportgassen zugeordneten Vorformlingen aufweist, die ausschließlich oder stärker temperierend auf die einer der beiden Transportgassen zugeordneten Vorformlinge wirkt.

Gattungsgemäß sind solche Temperierungseinrichtungen, in denen die die Heizelemente jeweils auf die Vorformlinge in beiden Transportgassen einwirken. Nicht gattungsgemäß sind hingegen Temperierungseinrichtungen, bei denen Heizelemente lediglich einer der beiden Transportgassen zugeordnet sind.

Die Erfindung ermöglicht es insbesondere, eine uneinheitliche thermische Konditionierung der den jeweiligen Transportgassen zugeordneten Vorformlinge mittels der Ausgleichsvorrichtung auszugleichen bzw. zu kompensieren. Damit entfällt die Notwendigkeit, eine strikte Gleichbehandlung der Vorformlinge in den beiden Transportgassen sicherzustellen, was nur durch erheblichen Aufwand zu erreichen, zu überwachen und dauerhaft sicherzustellen wäre.

Bei den Heizelementen handelt es sich vorzugsweise um Heizstrahler, beispielsweise um Infrarotstrahler bzw. IR-Strahler oder Nahinfrarot-Strahler bzw. NIR-Strahler. Hiermit ist eine wirtschaftliche und energieeffiziente Erwärmung der Vorformlinge ermöglicht. Erfindungsgemäß ist dabei insbesondere vorgesehen, dass die Heizstrahler in beide Transportgassen einstrahlen, so dass die entsprechenden Abschnitte der beiden Transportgassen einen einheitlichen Strahlungsraum bilden, in dem die Vorformlinge durch Strahlungseinwirkung erhitzt werden. Dabei erlauben in einer Ebene übereinander angeordnete Heizstrahler, die Vorformlinge mit einem auf den jeweiligen anschließenden Umformungsprozess angepassten Temperaturprofil zu versehen.

Das erfindungsgemäß Rundläuferprinzip der Transporteinrichtung zeichnet sich insbesondere dadurch aus, dass die Vorformlinge in einem kontinuierlichen Strom durch mit gleichbleibender Geschwindigkeit umlaufende Transportsysteme gefördert oder transportiert werden, wobei die Vorformlinge zwischen in Transportrichtung aufeinanderfolgenden Transportsystemen übergeben werden. Geeignet Transportsysteme umfassen beispielsweise geschlossen Förderketten, Räder oder rotierend gelagerte Teleskoparme. Die Transportsysteme tragen dabei jeweils Halteelemente für die Vorformlinge, beispielsweise Zangen oder Transportdorne.

Das Rundläuferprinzip unterscheidet sich dabei grundlegend von einer ebenfalls bekannten Taktförderung, bei der die Vorformlinge schrittweise durch abwechselnd vor- und zurückbewegten Transportmitteln und in der Regel geradlinig transportiert werden.

Der Abschnitt mit zwei nebeneinanderliegenden Transportgassen ist beispielsweise angeordnete zwischen einem Eingabebereich zur einreihigen Eingabe der Vorformlinge in die Transporteinrichtung und einem Ausgabebereich zur einreihigen Ausgabe der Vorformlingen aus der Transporteinrichtung. Beim Übergang zwischen einreihigem und zweireihigem Transport werden die Vorformlinge dabei je nach Ausgestaltung der Transporteinrichtung beispielsweise abwechselnd auf die beiden nebeneinanderliegenden Transportgassen verteilt und am Ende des doppelreihigen Transportabschnitts wieder abwechselnd zu einer einzelnen Reihe zusammengeführt. Die einzelnen Halteelemente der Transporteinrichtung werden dabei beispielsweise jeweils von einer gestreckten Konfiguration in eine kompakte Konfiguration und umgekehrt überführt.

Im Rahmen der Erfindung durchläuft jeder Vorformling entlang der Transportstrecke entweder die eine der beiden Transportgassen oder die andere. Jeder der Vorformlinge ist somit einer der beiden Transportgassen zuordnenbar, unabhängig davon, ob er sich gerade in der betreffenden Transportgasse befindet, bereits durchlaufen hat oder noch durchlaufen wird.

Die beiden Transportgassen werden erfindungsgemäß insbesondere in gleicher Transportrichtung durchlaufen. Dem steht nicht entgegen, dass mehrere Abschnitte mit zwei Gassen vorhanden sein können, wobei die Transportgassen des einen Abschnitts auch gegenläufig zu den Transportgassen des anderen Abschnitts durchlaufen werden können.

Im Rahmen der Erfindung wird unter temperieren insbesondere annähern an eine angestrebte Temperatur und/oder Temperaturverteilung verstanden, was abhängig von der Ausgangstemperatur begrifflich sowohl erwärmen oder erhitzen als auch kühlen umfassen kann.

Vorteilhafterweise ist vorgesehen, dass die Ausgleichsvorrichtung separat in ihrer Temperierungsleistung einstellbar ist. Separat meint in diesem Zusammenhang insbesondere, dass die Temperierungsleistung der Ausgleichsvorrichtung und die Temperierungsleistung der sonstigen Temperierung der Vorformlinge unabhängig voneinander veränderbar sind. Durch diese Einstellbarkeit wird vorteilhafterweise auch eine Anpassung an sich zeitlich verändernde Temperierungsunterschiede ermöglicht.

Wenn die Ausgleichsvorrichtung in ihrer Temperierungsleistung darüber hinaus steuerbar ist, so kann insbesondere auch eine Anpassung an variable Temperierungsunterschiede ohne Unterbrechung des Betriebs realisiert werden.

Besonders vorteilhaft ist es, wenn die Ausgleichsvorrichtung in ihrer Temperierungsleistung regelbar ist. Die Anpassung an variable oder veränderliche Temperierungsunterschiede kann dann automatisch erfolgen.

Eine vorteilhafte Ausführungsform der Erfindung ist dadurch gekennzeichnet, dass die Ausgleichsvorrichtung Bereitstellungsmittel für ein Kühlmedium zum Kühlen wenigstens der einer der beiden Transportgassen zugeordneten Vorformlinge umfasst, wobei die Bereitstellungsmittel einen Strömungsweg mit wenigstens einem den Vorformlingen zugewandten Auslass zum Beaufschlagen der Vorformlinge mit dem Kühlmedium umfassen. Diese Ausführungsform der Erfindung erlaubt insbesondere eine einfache konstruktive und steuerungstechnische Umsetzung der Erfindung, wobei vorzugsweise als Kühlmedium Luft oder Druckluft eingesetzt wird.

Eine einfache Einstellbarkeit der Kühlleistung ist beispielsweise gegeben, wenn der Auslass einen veränderbaren Querschnitt aufweist. Bei einem großflächigen Auslass kann dies beispielsweise konstruktiv sehr einfach durch zwei gegeneinander verschiebbare Lochbleche gelöst werden.

Es ist beispielsweise denkbar, den Auslass neben einer der beiden Transportgassen anzuordnen. Eine unterschiedliche temperierende Wirkung auf die Vorformlinge in den beiden Transportgassen wird dabei bereits dadurch sichergestellt, dass das Kühlmedium die Vorformlinge in den beiden Transportgassen nacheinander erreicht und somit in der dem Auslass entfernteren Transportgasse bereits einen Teil seiner Kühlleistung verloren hat. Hierbei bietet sich bevorzugt Luft als Kühlmedium an, wobei die Luft beispielsweise durch ein Gebläse in den Strömungsweg gefördert wird und die Kühlleistung sehr einfach durch entsprechende Ansteuerung des Gebläses einstellbar ist.

Die Unterschiede in der thermisch konditionierenden Wirkung können noch erhöht werden, wenn die Ausgleichsvorrichtung im Bereich des Auslasses eine zwischen den Transportgassen angeordnete Trennvorrichtung zum Abschirmen des Kühlmediums von der entfernten Transportgasse aufweist.

Ebenfalls im Rahmen der Erfindung denkbar ist es, dass die Bereitstellungsmittel ein Ventil in dem Strömungsweg umfassen, das mit der Transporteinrichtung synchronisierbar ist, um jeden an dem Auslass vorbeitransportierten Vorformling abhängig von der ihm zugeordneten Transportgasse mit dem Kühlmedium zu beaufschlagen. In diesem Zusammenhang ist denkbar, dass der Auslass als Düse oder Düsenanordnung ausgebildet ist, die beispielsweise in Transportrichtung nach den beiden Transportgassen angeordnet ist, d.h. in einem Abschnitt, in dem alle Vorformlinge in einer Reihe nacheinander transportiert oder gefördert werden. Das Kühlmittel kann in diesem Fall beispielsweise Druckluft sein, wobei mittels des synchronisierbaren Ventils nur diejenigen Vorformlinge mit einem oder mehreren Druckluftstößen beaufschlagt werden, die eine der beiden Transportgassen durchlaufen haben. Diese Ausführungsform ist besonders dann vorteilhaft, wenn in dem Abschnitt mit zwei Transportgassen für eine Ausgleichsvorrichtung kein ausreichender Platz zur Verfügung steht.

Eine andere bevorzugte Ausführungsform der Erfindung ist dadurch gekennzeichnet, dass die Ausgleichsvorrichtung Heizelemente umfasst. Hierdurch wird ermöglicht, die jeweils zu kalten Vorformlinge nachzuheizen. Der energetische doppelte Mehraufwand für das Kühlen zuvor überheizter Vorformlinge entfällt dabei.

Eine unterschiedliche temperierende Wirkung auf die Vorformlinge der beiden Transportgassen wird dabei beispielsweise dadurch erreicht, dass die Heizelemente der Ausgleichsvorrichtung zu den Vorformlingen in den beiden Transportgassen jeweils in unterschiedlichem Abstand angeordnet sind. Da bei gängigen Heizelementen, beispielsweise herkömmlichen Halogenstrahlern, die Leistungsdichte mit dem Abstand zum Strahler abnimmt werden die Vorformlinge in der näher liegenden Gasse stärker erwärmt als die Vorformlinge in der entfernteren Gasse. Dabei ist im Rahmen der Erfindung sowohl vorgesehen, dass Heizelemente zwischen den beiden Transportgassen zu einer der Gassen hin versetzt angeordnet werden oder aber auch außen liegend neben einer der Transportgassen.

Zusätzlich oder alternativ ist denkbar, dass die Heizelemente der Ausgleichsvorrichtung in Richtung einer der beiden Transportgassen wenigstens teilweise abgeschirmt sind.

Dies erfolgt beispielsweise mittels einer abschirmenden Beschichtung der Heizelemente, was aufgrund des geringen Platzbedarfes für solche Heizelemente bevorzugt ist, die zwischen den beiden Transportgassen angeordnet sind. Es ist auch denkbar, eine Abschirmvorrichtung vorzusehen, die zwischen den Heizelementen und der abzuschirmenden Transportgasse angeordnet ist. Für den Fall, dass die Heizelemente außen liegend neben einer der Transportgassen angeordnet sind, wird die Abschirmvorrichtung beispielsweise zwischen den Transportgassen vorgesehen.

Bei der Abschirmvorrichtung handelt es sich beispielsweise um einen Breitbandfilter, der die gefilterte Strahlung der Heizelemente in ihrer Intensität reduziert. Im Rahmen der Erfindung ist jedoch auch denkbar, dass mit einem selektiven Filter nur ein bestimmter Frequenzanteil des Strahlungsspektrums Heizelementen abschirmt wird. Beispielsweise ist von Quarzglas bekannt, dass langwellige Strahlungsanteile zurückgehalten werden.

Eine Abschirmvorrichtung kann im Rahmen der Erfindung auch als vollständige Trennung ausgeführt sein. In diesem Falle ist eine Ausführung als Reflektor besonders vorteilhaft, weil ein Aufheizen der Abschirmvorrichtung durch wenigstens teilweise Reflektion der auftreffenden Heizleistung verringert wird.

Neben den beschriebenen aktiv kühlenden oder aktiv heizenden Ausführungsformen einer erfindungsgemäßen Ausgleichsvorrichtung ist im Rahmen der Erfindung auch denkbar, dass die Ausgleichsvorrichtung eine weitere Transportvorrichtung für ausschließlich die einer der beiden Transportgassen zugeordneten Vorformlinge aufweist, so dass die Transportstrecke für diese Vorformlinge gegenüber den der anderen Transportgasse zugeordneten Vorformlingen verlängert wird. Während dieser verlängerten Transportstrecke kommt es allein auf Grund der gegenüber der erwärmten Vorformlingen geringeren Umgebungstemperatur zu einer Abkühlung der Vorformlinge.

Verschiedene Ausführungsformen erfindungsgemäßer Ausgleichsvorrichtungen sind dabei in der Regel beliebig kombinierbar. Es können daher im Rahmen der Erfindung auch mehrere Ausgleichsvorrichtungen mit unterschiedlicher temperierender Wirkung vorgesehen sein, die alle Vorformlinge in dieselben Transportgasse ausschließlich oder bevorzugt temperieren. Beispielsweise kann für eine der Transportgassen sowohl ein heizende als auch eine kühlende Ausgleichsvorrichtung vorhanden sein. Für die andere Transportgasse ist dann keine Ausgleichsvorrichtung mehr notwendig, was vorteilhaft ist, wenn aufgrund der Bauform bei einer der Transportgassen weniger Bauraum für Ausgleichsvorrichtungen zur Verfügung steht als bei der anderen Transportgasse.

Eine besonders bevorzugte Ausführung der Erfindung ist dadurch gekennzeichnet, dass die Temperierungseinrichtung zwei Ausgleichsvorrichtungen aufweist, von denen die eine Ausgleichsvorrichtung ausschließlich oder stärker temperierend auf die der einen Transportgasse zugeordneten Vorformlinge und die andere Ausgleichsvorrichtung ausschließlich oder stärker temperierend auf die der anderen Transportgasse zugeordneten Vorformlinge wirken. Hierdurch wird die vorteilhafte Verwendung der Erfindung auch dann ermöglicht, wenn nicht von vorneherein feststeht, welche der beiden Transportgassen zu den relativ wärmeren bzw. relativ kälteren Vorformlingen führt. Insbesondere vorteilhaft dabei ist es, wenn die beiden Ausgleichsvorrichtungen einzeln in ihrer Temperierungsleistung einstellbar sind.

Die der Erfindung zu Grunde liegende Aufgabe wird des Weiteren gelöst durch eine Behälterherstellungsmaschine zur Herstellung von Behältern aus Vorformlingen umfassend eine erfindungsgemäße Temperierungseinrichtung sowie eine Umformungseinrichtung zur Umformung der thermisch konditionierten Vorformlinge in Behälter. Die Umformungseinrichtung kann dabei beispielsweise eine Blasformeinrichtung zum Umformen mittels eines unter Druck stehenden Gases sein. Im Rahmen der Erfindung ist es jedoch auch denkbar, dass die Umformungseinrichtung zum Umformen mittels eines in den Behältern verbleibenden flüssigen Füllgutes ist.

Die Erfindung wird nachfolgend anhand von Ausführungsbeispielen der Erfindung näher erläutert, die in den Zeichnungen dargestellt sind. Es zeigen:
- Figur 1: schematisch ein Ausführungsbeispiel für eine erfindungsgemäße Behälterherstellungseinrichtung;
- Figur 2: schematisch einen Querschnitt durch eine Heizstrecke einer erfindungsgemäßen Temperierungseinrichtung;
- Figur 3a: schematisch einen Querschnitt durch ein Ausführungsbeispiel für eine Ausgleichsvorrichtung einer erfindungsgemäßen Temperierungseinrichtung;
- Figur 3b: eine Seitenansicht der Ausgleichsvorrichtung in Figur 3a;
- Figur 4a: einen Querschnitt eines weiteren Ausführungsbeispiels für eine Ausgleichsvorrichtung gemäß der Erfindung;
- Figur 4b: einen Querschnitt einer weiteren Ausführungsform einer Ausgleichsvorrichtung gemäß der Erfindung;
- Figur 5a: schematisch einen Ausschnitt eines Ausführungsbeispiels für eine Behälterherstellungsmaschine gemäß der Erfindung;
- Figur 5b: schematisch eine detailliertere Darstellung der Ausgleichsvorrichtung in Figur 5a;
- Figur 6a: einen Querschnitt eines weiteren Ausführungsbeispiels für eine Ausgleichsvorrichtung gemäß der Erfindung
- Figur 6b: einen Querschnitt eines weiteren Ausführungsbeispiels für eine Ausgleichsvorrichtung gemäß der Erfindung
- Figur 6c: einen Querschnitt eines weiteren Ausführungsbeispiels für eine Ausgleichsvorrichtung gemäß der Erfindung
- Figur 7a: einen Querschnitt einer weiteren Ausführungsform einer Ausgleichsvorrichtung gemäß der Erfindung;
- Figur 7b: einen Querschnitt einer weiteren Ausführungsform einer Ausgleichsvorrichtung gemäß der Erfindung;
- Figur 7c: einen Querschnitt einer weiteren Ausführungsform einer Ausgleichsvorrichtung gemäß der Erfindung;
- Figur 8a: schematisch ein weiteres Ausführungsbeispiel für eine Behälterherstellungsmaschine gemäß der Erfindung mit einer passiven Ausgleichsvorrichtung; und
- Figur 8b: schematisch ein weiteres Ausführungsbeispiel für eine Behälterherstellungsmaschine gemäß der Erfindung mit einer passiven Ausgleichsvorrichtung.

In den Zeichnungen sind jeweils gleiche oder gleichartige Elemente und/oder Teile mit denselben Bezugszeichen versehen, so dass von einer erneuten Vorstellung jeweils abgesehen werden kann.

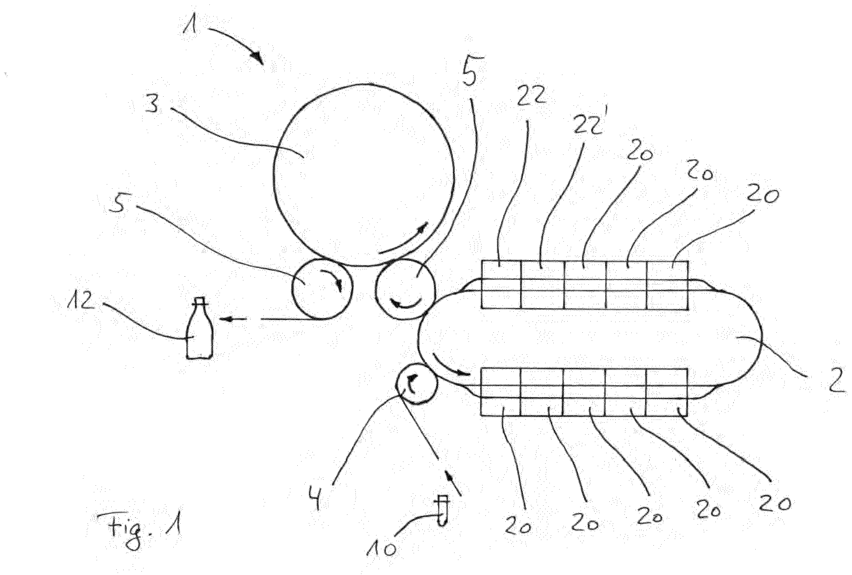

Figur 1 zeigt eine beispielhafte Behälterherstellungsmaschine 1 gemäß der Erfindung. Die beispielhafte Behälterherstellungsmaschine 1 ist aufgebaut nach dem Rundläuferprinzip und weist mehrere Stationen 2, 3, 4, 5 mit umlaufenden Transportsystemen auf, deren Umlaufrichtung jeweils durch Pfeile angedeutet ist. In die Behälterherstellungsmaschine 1 werden Vorformlinge 10 eingegeben, mittels der Transportsysteme in kontinuierlichem Strom durch die Behälterherstellungsmaschine 1 transportiert werden und dabei in mehreren, aufeinander folgenden Behandlungsschritten zu Behältern 12 verarbeitet werden, die schließlich aus der Behälterherstellungsmaschine 1 ausgegeben werden. Dabei werden die Vorformlinge 10 bzw. die Behälter 12 entlang der Transportstrecke jeweils von einem Transportsystem zum nächsten übergeben.

Die Vorformlinge 10 gelangen zunächst zu einer Eingabestation 4, wo sie zu einem kontinuierlichem, vorzugsweise lückenlosen, Transportstrom formiert werden.

Die Vorformlinge 10 werden so dann in kontinuierlichem Strom an eine Temperierungseinrichtung 2 übergeben, mittels derer die Vorformlinge 10 für eine anschließende Umformung in die Behälter 12 zunächst thermisch konditioniert werden. Das Transportsystem der Temperierungseinrichtung 2 ist dabei derart ausgelegt, dass der kontinuierliche Strom an Vorformlingen 10 entlang zweier geradliniger Abschnitte, in denen die jeweilige Temperierungsbehandlung stattfindet, aufgespalten wird, so dass in diesen Abschnitten die Vorformlinge 10 in jeweils zwei parallel zueinander verlaufenden Reihen transportiert werden. Entlang dieser doppelreihigen Abschnitte sind mehrere Heizvorrichtungen 20 zum Erwärmen der Vorformlinge 10 vorgesehen.

Des Weiteren sind zwei Ausgleichsvorrichtungen 22, 22' vorgesehen, die ebenfalls temperierend, d.h. erwärmend oder kühlend, auf die Vorformlinge 10 wirken. Die Ausgleichsvorrichtungen 20, 22, 22' sind dabei derart ausgebildet, dass sie die Vorformlinge einer der beiden Reihen stärker kühlen bzw. erwärmen als die Vorformlinge 10 der anderen Reihe. Die Ausgleichsvorrichtungen 22, 22' sind dabei derart aufeinander abgestimmt, dass sie jeweils eine andere der beiden Reihen an Vorformlingen 10 bevorzugen. Hierzu sind die Ausgleichsvorrichtungen 22, 22' beispielsweise in ihren wesentlichen wirkenden Komponenten spiegelbildlich zueinander aufgebaut.

Durch separate Ansteuerung der beiden Ausgleichsvorrichtungen 22, 22' wird es ermöglicht, etwaige vorhandene Temperierungsunterschiede zwischen den beiden Reihen von Vorformlingen 10 nach dem Durchlaufen der Heizvorrichtungen 20 auszugleichen. Dadurch wird sichergestellt, dass alle Vorformlinge 10 ungeachtet in welcher der beiden Reihen sie die Temperierungseinrichtung 2 durchlaufen haben, eine einheitliche Temperierung, d.h. beispielsweise eine einheitliche Temperatur und/oder ein einheitliches Temperaturprofil, aufweisen.

Von der Temperierungseinrichtung 2 werden die Vorformlinge 10 in einreihigem kontinuierlichen Strom mittels einer Transferstation 5 an eine Umformungseinrichtung 30 übergeben, mittels derer die Vorformlinge 10 zu Behältern 12 umgeformt werden. Hierbei ist im Rahmen der Erfindung sowohl eine Blasluftumformung mittels Druckluft als auch eine Formfüllumformung mittels eines flüssigen Füllgutes unter Druck, das anschließend in dem ausgeformten Behälter verbleibt, denkbar. Die fertigen Behälter 12 werden dann mittels einer weiteren Transferstation 5 ausgegeben und einer etwaigen weiteren Behandlung, beispielsweise einem Füllen, Verschließen und/oder Etikettieren, zugeführt.

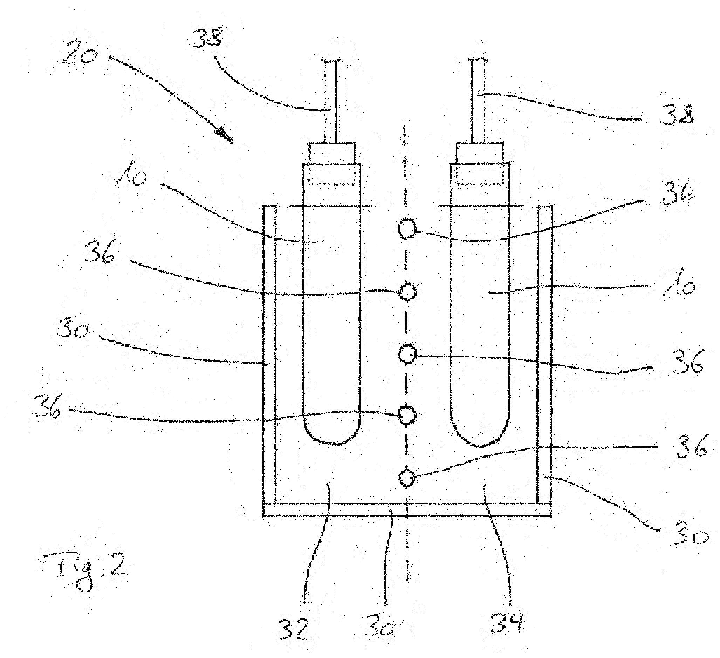

Figur 2 zeigt einen Querschnitt durch eine der Heizvorrichtungen 20 in vereinfachter Darstellung. Die Heizvorrichtung 20 weist einen durch Reflektoren 30 begrenzten Strahlungsraum auf, in dem zwei Transportgassen 32, 34 für jeweils eine der bereits beschriebenen parallelen Reihen an Vorformlingen 10 vorgesehen sind. Die Vorformlinge 10 werden dabei beispielsweise mittels Transportdornen 38 des Transportsystems in der Temperierungseinrichtung 2 hängend gehalten, wobei eine in Umfangsrichtung homogene Temperierung durch Drehung der Transportdorne 38 sichergestellt wird.

Die Erwärmung der Vorformlinge 10 erfolgt dabei mittels Infrarotstrahler 36, die sich entlang der Transportrichtung der Vorformlinge 10 erstrecken und in der Mittelebene, dargestellt als gestrichelte Linie, zwischen den Transportgassen 32, 34 angeordnet sind. Über geeignete Leistungsansteuerung der übereinanderliegenden Infrarotstrahler 36 ist dabei eine Profilierung der Vorformlingstemperatur entlang der Längsachse der Vorformlinge 10 erreichbar. Die Infrarotstrahler 36 sind dabei derart angeordnet, dass jeder Infrarotstrahler 36 auf Vorformlinge 10 in beiden Transportgassen 32, 34 einwirkt.

Die Heizvorrichtung kann weitere branchenübliche Elemente aufweisen, beispielsweise eine Kühlung für die Mündungen der Vorformlinge 10, oder Blenden und mitfahrende Reflektoren, die den Strahlungsraum nach oben begrenzen. Derartige Elemente sind aus Gründen der Übersichtlichkeit in Fig. 2 nicht gezeigt.

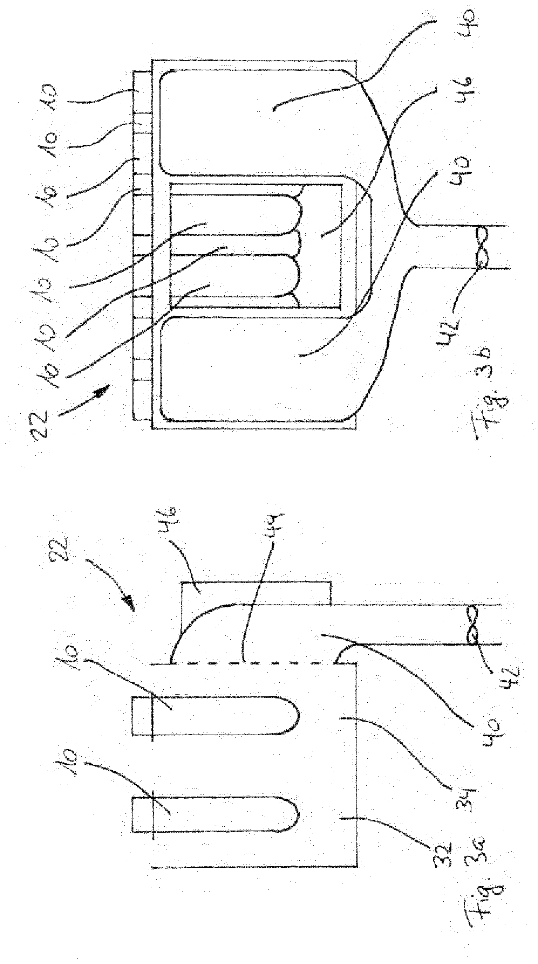

Ein erstes Ausführungsbeispiel für eine Ausgleichsvorrichtung 22 gemäß der Erfindung ist in den Figuren 3a und 3b gezeigt. Dabei ist vorgesehen, die Vorformlinge 10 mit einem Kühlluftstrom zu beaufschlagen, um etwaige überschüssige Wärmeenergie abzuführen.

Zum Einleiten der Kühlluft ist ein Strömungskanal 40 vorgesehen, der seitlich neben einer der Transportgassen 34 mündet. Am Auslass ist beispielsweise ein Lochblech 44 vorgesehen, um eine gleichmäßig flächige Luftströmung zu erzeugen. Außerdem ist denkbar, dass Lochblech 44 aus zwei gegeneinander verschiebbaren Blechen aufzubauen, um so den Strömungsquerschnitt von dem Strömungskanal 40 in die Transportgasse 34 einzustellen zu können.

Weiterhin ist in dem Strömungskanal 40 ein Gebläse 42 vorgesehen, um einen kontrollierten Kühlluftstrom sicher zu stellen. Neben dem Auslass des Strömungskanals 40 ist eine große Abluftöffnung 46 vorgesehen, um zu verhindern, dass sich die Kühlluft in den Transportgassen 34, 32 staut oder unkontrolliert entlang der Transportrichtung der Vorformlinge 10 verteilt.

Durch die seitliche Anordnung des Strömungskanals 40 neben der Transportgasse (34) werden zunächst die Vorformlinge 10 in der Transportgasse 34 mit dem Kühlluftstrom beaufschlagt. Die Vorformlinge 10 in der Transportgasse 32 hingegen werden einerseits durch die Vorformlinge 10 der Transportgasse 34 abgeschattet und andererseits mit Kühlluft beaufschlagt, die bereits durch die Vorformlinge 10 in der Transportgasse 34 erwärmt wurde. Die kühlende Wirkung des Kühlmediums ist dadurch wesentlich stärker auf die Vorformlinge 10 in der Transportgasse 34 als auf die Vorformlinge 10 in der Transportgasse 32.

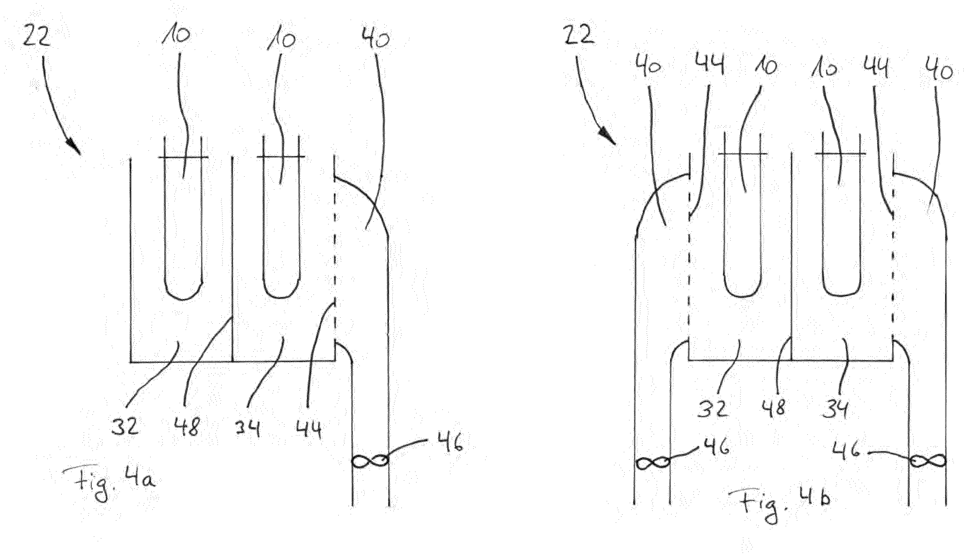

Wenn, wie in Figur 4a dargestellt, zwischen den Transportgassen 32, 34 darüber hinaus eine Trennwand 48 vorgesehen ist, wird die asymmetrische Wirkung maximiert, weil die Kühlluftströmung die Vorformlinge 10 in der Transportgasse 32 überhaupt nicht mehr erreicht und ausschließlich die Vorformlinge 10 in der Transportgasse 34 kühlt.

Sofern bekannt ist, dass immer die Vorformlinge 10 in derselben Transportgasse 32 oder 34 wärmer sind als in der anderen Transportgasse 34 bzw. 32 und entsprechend zum Temperierungsausgleich gekühlt werden müssen, so reicht eine einzige Ausgleichsvorrichtung 22 gemäß der in Figuren 3a, 3b oder 4a gezeigten Ausführungsbeispiele. Sind bei unterschiedlichen Einstellungen mal die Vorformlinge 10 der einen Gasse 32, 34 oder der anderen Transportgasse 34, 32 die wärmeren, so ist ein Ausgleich beispielsweise erreichbar, in dem wie in Figur 1 gezeigt zwei Ausgleichsvorrichtungen 22, 22' vorgesehen sind. Die Ausgleichsvorrichtung 22' kann dabei nach demselben Prinzip aufgebaut sein, wie die gezeigten Ausführungsbeispiele in den Figuren 3a, 3b oder 4a, wobei für die Ausgleichsvorrichtungen 22' der Strömungskanal seitlich der jeweils links dargestellten Transportgasse 32 angeordnet ist.

Es ist jedoch auch möglich, den Platzbedarf zu minimieren und die Vorformlinge 10 in beiden Transportgassen 32, 34 unabhängig voneinander zu kühlen. Ein hierfür geeignetes Ausführungsbeispiel einer erfindungsgemäßen Ausgleichsvorrichtung 22 ist in Figur 4b gezeigt. Hierbei sind die Transportgassen 32, 34 wieder mittels einer Trennwand 48 strömungstechnisch voneinander getrennt, wobei jede der Transportgassen 32, 34 über eine separate Kühlluftzuführung mit Strömungskanal 40 und Gebläse 42 sowie optionalem Lochblech 44 verfügt, wobei die Kühlmittelströmungen auf beiden Seiten in der beschriebenen Art und Weise mittels der Gebläse 42 und/oder der Lochbleche 44 unabhängig voneinander einstellbar sind.

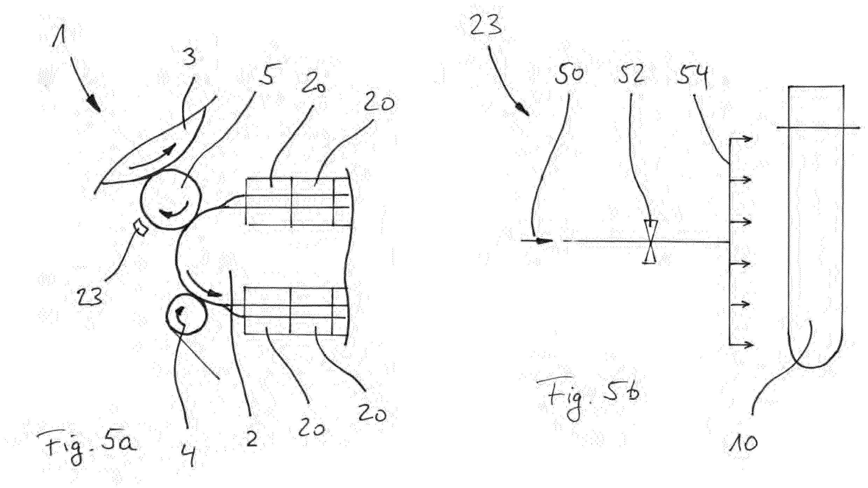

Behälterherstellungsmaschinen 1, insbesondere solche mit Blasluftumformung, verfügen in der Regel über eine Druckluftversorgung mittels eines Kompressors. Im Rahmen der Erfindung ist daher auch denkbar, diese sowieso vorhandene Druckluft zum Ausgleich von Temperierungsunterschieden zu nutzen. Ein Ausführungsbeispiel für eine entsprechenden Ausgleichsvorrichtung 23 gemäß der Erfindung ist in Figur 5b gezeigt. Druckluft aus einer Druckluftversorgung 50 wird über eine Düsenanordnung 54 unmittelbar auf einen Vorformling 10 geleitet, der an der Düsenanordnung 54 vorbei gefördert wird. Ein vorgeschaltetes Ventil 52 ermöglicht beispielsweise die Einstellung unterschiedlich langer Druckstöße und somit unterschiedlicher Kühlleistung, ermöglicht aber auch die Synchronisierung mit der Förderung der Vorformlinge 10. Es ist daher auch möglich, die in Figur 5b gezeigte Ausgleichsvorrichtung 22 anstand neben einer der Transportgassen 32, 34 dort zu platzieren, wo alle Vorformlinge 10 einreihig transportiert werden, wobei mittels des Ventils nur solche Vorformlinge 10 mit Druckluft beaufschlagt werden, die zuvor eine der beiden Transportgassen 32 oder 34 durchlaufen haben. In Figur 5a ist eine beispielhafte Anordnung der Ausgleichsvorrichtung 23 an der Transferstation 5 zwischen der Temperierungseinrichtung 2 und der Umformungseinrichtung 3 gezeigt, wobei die Ausgleichsvorrichtung 23 ungeachtet ihrer Anordnung funktionell und steuerungstechnisch der Temperierung bzw. der Temperierungseinrichtung 2 zuzuordnen ist.

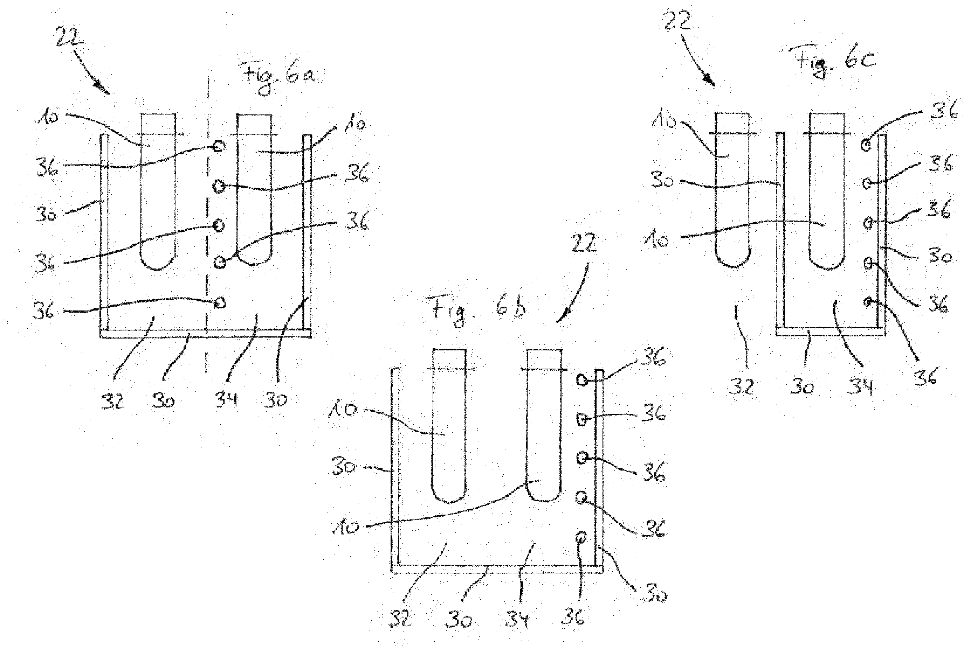

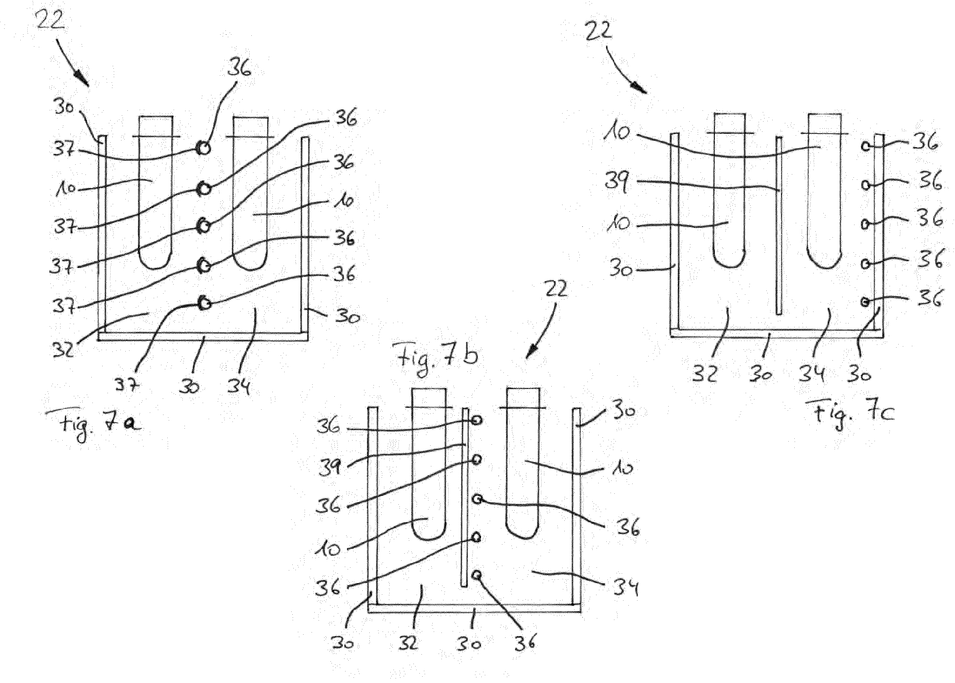

Der in den bisher diskutierten Ausführungsformen der Erfindung beschriebene Temperierungsausgleich durch selektives Kühlen ist konstruktiv wie von der Steuerung her sehr einfach umzusetzen und ermöglicht somit eine kostengünstige und wirksame Implementierung der Erfindung. Im Betrieb ist sie hingegen weniger energieeffizient, da zunächst überschüssige Energie in den Vorformling 10 eingebracht und später unter weiterem Energieaufwand wieder gekühlt wird. Energetisch ist es daher günstiger, bei dem beschriebenen temperierenden Ausgleich die zu der gewünschten Temperierung noch fehlenden Energie oder Wärme in den Vorformling 10. Verschiedenen Ausführungsformen für eine entsprechende Ausgleichsvorrichtung 22 gemäß der Erfindung sind in den Figuren 6a, 6b und 6c sowie 7a, 7b und 7c gezeigt.

In Figur 6a gezeigtem Ausführungsbeispiel entspricht die Ausgleichsvorrichtung 22 in den wesentlichen Komponenten einer in Figur 2 gezeigten Heizvorrichtung 20. Allerdings sind bei der Ausgleichsvorrichtung 22 im Gegensatz zur Heizvorrichtung 20 die Heizstrahler 36 nicht mittig zwischen den Vorformlingen 10 der beiden Transportgassen 32, 34 angeordnet, sondern zu einer der beiden Transportgassen 34 hin verschoben. Durch den geringeren Abstand ist die auf die Vorformlinge 10 in der Transportgasse 34 auftreffende Strahlungsleistung der Infrarotstrahler 36 dadurch höher als die auf die Vorformlinge 10 in der Transportgasse 32 auftreffende Strahlungsleistung.

Im Rahmen der Erfindung ist auch denkbar, anstatt der Heizvorrichtungen 20 für die gesamte Heizstrecke der in Figur 1 gezeigten Behälterherstellungsmaschine 1 ausschließlich Ausgleichsvorrichtungen 22 gemäß dem Ausführungsbeispiel aus Figur 6a zu verwenden, wobei die Infrarotstrahler 36 abwechselnd hin zu der Transportgasse 32 und hin zu der Transportgasse 34 verschoben sind. Die Ausgleichsvorrichtungen 22 bilden dann anhand der Versatzrichtung jeweils ein Gruppe, wobei die beiden Gruppen vorzugsweise unabhängig voneinander angesteuert werden.

Eine alternative Ausführungsform einer Ausgleichsvorrichtung 22 mit asymmetrischer Beheizung ist in Figur 6b gezeigt. Hier sind die Infrarotstrahler 36 nicht zwischen den beiden Transportgassen 32, 34, sondern an der äußeren Seite der Transportgasse 34 angeordnet. Das Konzept der unterschiedlichen Beheizung durch unterschiedlichen Abstand und somit unterschiedliche Strahlungsleistung bleibt dabei wie in dem in Figur 6a gezeigtem Beispiel erhalten, wobei der Unterschied in den Abständen zwischen den Vorformlingen in den Transportgassen 32, 34 und den Infrarotstrahlern 36 und somit auch der Unterschied in den jeweiligen auftreffenden Strahlungsleistungen wesentlich größer ist als in dem Ausführungsbeispiel der Figur 6a.

Diese Asymmetrie kann, wie in Figur 6c gezeigt, noch dadurch maximiert werden, dass zwischen den Transportgassen 32, 34 ein Reflektor 30 angeordnet wird, so dass sämtliche Strahlung der Infrarotstrahler 36 auf Vorformlinge 10 in der Transportgasse 34 beschränkt bleibt, während die Vorformlinge 10 in der Transportgasse 32 gar nicht geheizt werden.

Im Bereich der Ausgleichsvorrichtung 22 ist es im Rahmen der Erfindung somit denkbar, dass die beiden Transportgassen 32, 34 einen einheitlichen Strahlungsraum, vgl. die Ausführungsformen der Fig. 6a und 6b, oder getrennte Strahlungsräume bilden oder dass, wie in Fig. 6c gezeigt, nur eine der beiden Transportgassen 32, 34 durch einen Strahlungsraum führt.

Eine weitere Ausführungsform einer erfindungsgemäßen Ausgleichsvorrichtung ist in Figur 7a gezeigt. Auch diese Ausführungsform ist im Grundsatz angelehnt an die in Figur 2 beschriebene Gestaltung einer Heizvorrichtung 20. Allerdings sind bei der Ausgleichsvorrichtung 22 in Figur 7a Infrarotstrahler 36 vorgesehen, die auf der einer der beiden Transportgassen 32, 34 zugewandten Seite eine Beschichtung 37 aufweisen. Die in diese Richtung abgegebene Strahlung der Infrarotstrahler 36 wird so wenigstens teilweise abgeschirmt, so dass die auf die Vorformlinge 10 in der Transportgasse 32 treffende Strahlungsleistung geringer ist als die auf die Vorformlinge 10 in der Transportgasse 34 treffende Strahlungsleistung. Alternativ zu der abschirmenden Beschichtung 37 auf den Infrarotstrahlern 36 selbst ist auch denkbar, eine entsprechende Abschirmung oder einen entsprechenden Filter 39 neben den Infrarotstrahlern 36 zu positionieren, wie in Figur 7b gezeigt. Es ist auch denkbar, das Konzept der Figuren 6a-c, d.h. die Ungleichbehandlung von Vorformlingen 10 in den beiden Transportgassen 32, 34 durch unterschiedlichen Abstand zu den Infrarotstrahlern 36, mit einer Abschirmung oder einer Filterung zu kombinieren. Beispielsweise ist denkbar, wie in Figur 7c gezeigt, die Infrarotstrahler 36 außen an einer der Transportgassen 34 anzuordnen und zwischen den Transportgassen 32, 34 zusätzlich einen Filter oder eine Abschirmung 39 vorzusehen.

Im Rahmen der Erfindung kann eine Abschirmung oder ein Filter oder eine Beschichtung auch frequenzselektiv ausgeführt werden. Es ist beispielsweise bekannt, dass PET als häufig verwendetes Ausgangsmaterial in der Verpackungsindustrie langwellige Infrarotstrahlung besonders gut absorbiert, während Quarzglas gerade langwellige Frequenzanteile zurückhält. Dadurch ist ein kostengünstiger, mechanisch und thermisch robuster sowie einfach herzustellender Filter gegeben, der keine aufwendige Oberflächenbehandlung oder Beschichtungen erfordert.

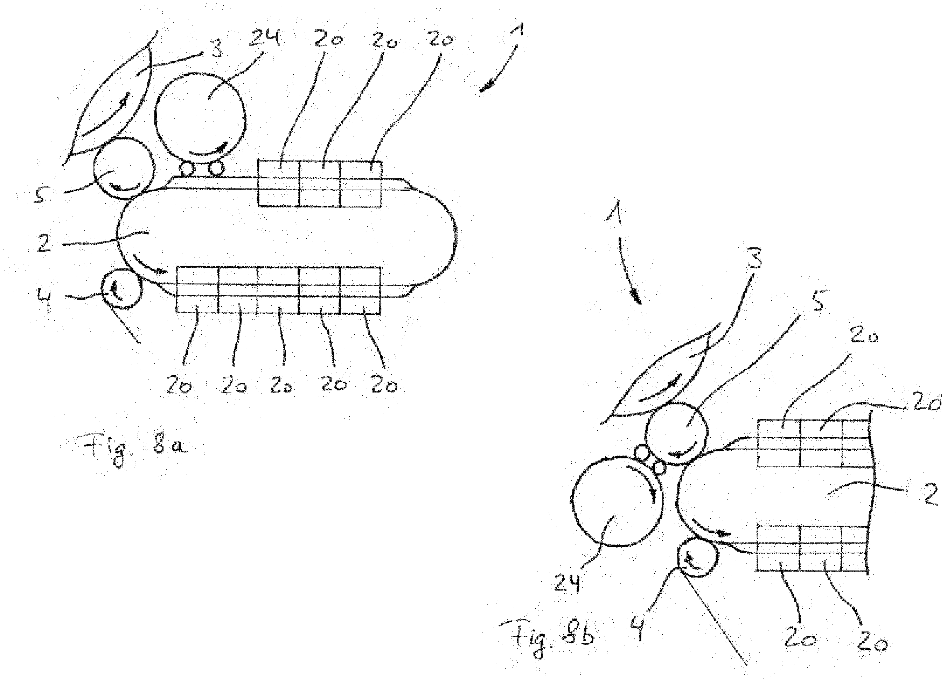

Die bisher diskutierten Ausführungsformen der Erfindung sind dadurch gekennzeichnet, dass sie alle aktiv kühlend oder heizend auf die Vorformlinge 10 wirken. Im Rahmen der Erfindung ist jedoch auch denkbar, die geheizten Vorformlinge 10 aus den beiden Transportgassen 32, 34 unterschiedlich weit zu der nachfolgenden Umformungseinrichtung 3 zu transportieren, wodurch sich vor der Umformung die länger transportierten Vorformlinge 10 in der kälteren Umgebung stärker abkühlen als die auf direktem Weg zu der Umformungseinrichtung 3 transportierten Vorformlinge 10. Eine entsprechende Ausführungsform der Erfindung ist in Figur 8a gezeigt. Dort dargestellt ist ein Ausschnitt der Behälterherstellungsmaschine 1 mit der Temperierungseinrichtung 2, wobei nach den Heizvorrichtungen 20 eine Ausgleichsvorrichtung 24 vorgesehen ist, die ausschließlich einer der beiden Heizgassen 32, 34 zugeordnet ist. Die Ausgleichsvorrichtung 24 umfasst dabei mindestens 3 Transporträder, die den Pfad für Vorformlinge 10 aus einer der Transportgassen 32, 34 gegenüber der anderen Transportgasse 34, 32 verlängern. Alternativ ist auch denkbar, eine derartige Ausgleichsvorrichtung 24 wie in Figur 8b gezeigt, an einer späteren Stelle der Transportstrecke zu positionieren, beispielsweise an der Transferstation 5 zwischen der Temperierungseinrichtung 2 und der Umformungseinrichtung 3. Hier ist darauf zu achten, dass mittels der Ausgleichsvorrichtung 24, beispielsweise durch geeigneten Teilungsabstand, nur ein Teil der Vorformlinge 10 umgeleitet wird. Da am Ende des doppelreihigen Transportes mit zwei Transportgassen 32, 34 in der Regel die Vorformlinge abwechselnd in den einreihigen Weitertransport überführt werden, wäre somit mittels der Ausgleichsvorrichtung 24 in Figur 8b nur jeder zweite Vorformling 10 umzuleiten.

### BEZUGSZEICHEN

- 1: Behälterherstellungsmaschine
- 2: Temperierungseinrichtung
- 3: Umformeinrichtung
- 4: Eingabestation
- 5: Transferstation
- 10: Vorformling
- 12: Behälter
- 20: Heizvorrichtung
- 22, 22': aktive Ausgleichsvorrichtung
- 23: aktive Ausgleichsvorrichtung
- 24: passive Ausgleichsvorrichtung
- 30: Reflektor
- 32, 34: Transportgasse
- 36: Infrarotstrahler
- 37: Beschichtung
- 38: Transportdorn
- 39: Filterscheibe
- 40: Strömungskanal
- 42: Gebläse
- 44: Lochblech
- 46: Abluftöffnung
- 48: Trennwand
- 50: Druckluftversorgung
- 52: Ventil
- 54: Düsenanordnung

## Patentansprüche

1. Temperierungseinrichtung (2) zur thermischen Konditionierung von Vorformlingen (10) aus einem thermoplastischen Material für eine anschließende Umformung umfassend eine Transporteinrichtung nach dem Rundläuferprinzip zum Transport der Vorformlinge (10) entlang einer Transportstrecke, wobei die Transportstrecke wenigstens einen Abschnitt mit zwei nebeneinanderliegenden Transportgassen zum Transport der Vorformlinge (10) in zwei nebeneinanderliegenden Reihen aufweist, so dass jeder Vorformling (10) einer der beiden Transportgassen (32, 34) zuordnenbar ist, wobei die Temperierungseinrichtung (2) ferner zwischen den Transportgassen (32, 34) angeordnete Heizelemente (36) zum Erwärmen der Vorformlinge (10) umfasst, wobei die Heizelemente (36) derart zwischen den Transportgassen (32, 34) angeordnet sind, dass jedes Heizelement (36) auf Vorformlinge (10) in beiden Transportgassen (32, 34) einwirkt,
**dadurch gekennzeichnet, dass**
die Temperierungseinrichtung (2) wenigstens eine Ausgleichsvorrichtung (22, 22', 23, 24) zum Ausgleich von Temperierungsunterschieden zwischen den den beiden Transportgassen (32, 34) zugeordneten Vorformlingen (10) aufweist, die ausschließlich oder stärker temperierend auf die einer der beiden Transportgassen (32, 34) zugeordneten Vorformlinge (10) wirkt.

2. Temperierungseinrichtung (2) gemäß Anspruch 1,
**dadurch gekennzeichnet, dass**
die Ausgleichsvorrichtung (22, 22', 23, 24) separat in ihrer Temperierungsleistung einstellbar und/oder steuerbar und/oder regelbar ist.

3. Temperierungseinrichtung (2) gemäß Anspruch 1 oder 2,
**dadurch gekennzeichnet, dass**
die Ausgleichsvorrichtung Bereitstellungsmittel für ein Kühlmedium zum Kühlen wenigstens der einer der beiden Transportgassen (32, 34) zugeordneten Vorformlinge (10) umfasst, wobei die Bereitstellungsmittel einen Strömungsweg (40) mit wenigstens einem den Vorformlingen (10) zugewandten Auslass (44, 54) zum Beaufschlagen der Vorformlinge (10) mit dem Kühlmedium umfassen.

4. Temperierungseinrichtung (2) gemäß Anspruch 3,
**dadurch gekennzeichnet, dass**
der Auslass (44, 54) neben einer der beiden Transportgassen (32, 34) angeordnet ist, wobei die Ausgleichsvorrichtung (22, 22', 23, 24) im Bereich des Auslasses bevorzugt eine zwischen den Transportgassen (32, 34) angeordnete Trennvorrichtung (48) zum Abschirmen des Kühlmediums von der anderen Transportgasse (34, 32) aufweist.

5. Temperierungseinrichtung (2) gemäß Anspruch 3 oder 4,
**dadurch gekennzeichnet, dass**
die Bereitstellungsmittel ein Ventil (52) in dem Strömungsweg umfassen, das mit der Transporteinrichtung synchronisierbar ist, um jeden an dem Auslass vorbeitransportierten Vorformling (10) abhängig von der ihm zugeordneten Transportgasse (32, 34) mit dem Kühlmedium zu beaufschlagen.

6. Temperierungseinrichtung (2) gemäß einem der Ansprüche 1 bis 5, **dadurch gekennzeichnet, dass**
die Ausgleichsvorrichtung (22, 22', 23, 24) Heizelemente (36) umfasst.

7. Temperierungseinrichtung (2) gemäß Anspruch 6,
**dadurch gekennzeichnet, dass**
die Heizelemente (36) der Ausgleichsvorrichtung (22, 22', 23, 24) zu den Vorformlingen (10) in den beiden Transportgassen (32, 34) jeweils in unterschiedlichem Abstand angeordnet sind.

8. Temperierungseinrichtung (2) gemäß Anspruch 6 oder 7,
**dadurch gekennzeichnet, dass**
die Heizelemente (36) der Ausgleichsvorrichtung (22, 22', 23, 24) in Richtung einer der beiden Transportgassen (32, 34) wenigstens teilweise abgeschirmt sind, insbesondere mittels einer abschirmenden Beschichtung (37) der Heizelemente (36) und/oder mittels einer zwischen den Heizelementen (36) und der betreffenden Transportgasse (32, 34) angeordneten Abschirmvorrichtung (30, 39).

9. Temperierungseinrichtung (2) gemäß einem der Ansprüche 1 bis 8, **dadurch gekennzeichnet, dass**
die Ausgleichsvorrichtung (22, 22', 23, 24) eine weitere Transportvorrichtung (24) für ausschließlich die einer der beiden Transportgassen (32, 34) zugeordneten Vorformlinge (10) aufweist, so dass die Transportstrecke für diese Vorformlinge (10) gegenüber den der anderen Transportgasse (32, 34) zugeordneten Vorformlingen (10) verlängert wird.

10. Temperierungseinrichtung (2) gemäß einem der Ansprüche 1 bis 9, **dadurch gekennzeichnet, dass**
die Temperierungseinrichtung (2) zwei Ausgleichsvorrichtungen (22, 22', 23, 24) aufweist, von denen die eine Ausgleichsvorrichtung (22, 22', 23, 24) ausschließlich oder stärker temperierend auf die der einen Transportgasse (32, 34) zugeordneten Vorformlinge (10) und die andere Ausgleichsvorrichtung (22, 22', 23, 24) ausschließlich oder stärker temperierend auf die der anderen Transportgasse (32, 34) zugeordneten Vorformlinge (10) wirken, wobei die zwei Ausgleichsvorrichtungen (22, 22', 23, 24) insbesondere einzeln in ihrer Temperierungsleistung einstellbar sind.

11. Behälterherstellungsmaschine (1) zur Herstellung von Behältern (12) aus Vorformlingen (10) umfassend eine Temperierungseinrichtung (2) zur thermischen Konditionierung von Vorformlingen (10) aus einem thermoplastischen Material gemäß einem der Ansprüche 1 bis 10 sowie eine Umformungseinrichtung (3) zur Umformung der thermisch konditionierten Vorformlinge (10) in Behälter (12), wobei die Umformungseinrichtung (3) insbesondere eine Blasformeinrichtung zum Umformen mittels eines unter Druck stehenden Gases oder eine Formfülleinrichtung zum Umformen mittels eines in den Behältern (12) verbleibenden flüssigen Füllgutes ist.

## Claims

1. Temperature adjustment device (2) for the thermal conditioning of preforms (10) made of a thermoplastic material for subsequent molding, comprising a transport device based on the rotary principle for transporting the preforms (10) along a transport path, the transport path having at least one section with two adjacent transport lanes for transporting the preforms (10) in two adjacent rows, so that each preform (10) can be assigned to one of the two transport lanes (32, 34), the temperature adjustment device (2) further comprising heating elements (36) arranged between the transport lanes (32, 34) for heating the preforms (10), the heating elements (36) being arranged between the transport lanes (32, 34) in such a way that each heating element (36) acts on preforms (10) in both transport lanes (32, 34), **characterized in that**
the temperature adjustment device (2) has at least one compensation device (22, 22', 23, 24) to compensate for temperature differences between the preforms (10) assigned to the two transport lanes (32, 34), which exclusively or more strongly acts on preforms (10) associated to one of the two transport lanes (32, 34) for adjusting their temperature.

2. Temperature adjustment device (2) according to claim 1,
**characterized in that**
the compensation device (22, 22', 23, 24) is adjustable and/or controllable and/or closed loop controllable in its temperature adjustment performance.

3. Temperature adjustment device (2) according to claim 1 or 2,
**characterized in that**
the compensation device comprises supply means for a cooling agent for cooling at least the preforms (10) assigned to one of the two transport lanes (32, 34), the supply means having a flow path (40) with at least one outlet (44, 54) facing the preforms (10) for subjecting the preforms (10) to the cooling agent.

4. Temperature adjustment device (2) according to claim 3,
**characterized in that**
the outlet (44, 54) is arranged next to one of the two transport lanes (32, 34), the compensation device (22, 22', 23, 24) preferably having a separation device (48) in the area of the outlet arranged between the transport lanes (32, 34) for shielding the cooling agent from the other transport lane (34, 32).

5. Temperature adjustment device (2) according to claim 3 or 4,
**characterized in that**
the supply means comprise a valve (52) in the flow path which can be synchronized with the transport device in order to subject each preform (10) transported past the outlet to the cooling agent depending on the transport lane (32, 34) it is assigned to.

6. Temperature adjustment device (2) according to one of claims 1 to 5,
**characterized in that**
the compensation device (22, 22', 23, 24) comprises heating elements (36).

7. Temperature adjustment device (2) according to claim 6,
**characterized in that**
the heating elements (36) of the compensation device (22, 22', 23, 24) are arranged at different distances from the preforms (10) in the two transport lanes (32, 34).

8. Temperature adjustment device (2) according to claim 6 or 7,
**characterized in that**
the heating elements (36) of the compensation device (22, 22', 23, 24) are at least partially shielded in the direction of one of the two transport lanes (32, 34), in particular by means of a shielding coating (37) of the heating elements (36) and/or by means of a shielding device (30, 39) arranged between the heating elements (36) and the relevant transport alley (32, 34).

9. Temperature adjustment device (2) according to one of claims 1 to 8,
**characterized in that**
the compensation device (22, 22', 23, 24) comprises another transport device (24) for the preforms (10) assigned to one of the two transport lanes (32, 34) only, so that the transport path for these preforms (10) is lengthened compared to the preforms (10) assigned to the other transport lane (32, 34).

10. Temperature adjustment device (2) according to one of claims 1 to 9, **characterized in that** the temperature adjustment device (2) has two compensation devices (22, 22', 23, 24), of which one compensation device (22, 22', 23, 24) exclusively or more strongly acts on preforms (10) associated to one of the two transport lanes (32, 34) for adjusting their temperature and of which the other compensation device (22, 22', 23, 24) exclusively or more strongly acts on preforms (10) associated to the other transport lane (32, 34), wherein in particular the two compensation devices (22, 22', 23, 24) are adjustable individually in their temperature adjustment performance.

11. Container manufacturing machine (1) for manufacturing containers (12) from preforms (10) comprising a temperature adjustment device (2) for thermal conditioning of preforms (10) made of a thermoplastic material according to one of claims 1 to 10 and a molding device (3) for molding the thermally conditioned preforms (10) into containers (12), wherein the shaping device (3) is in particular a blow molding device for molding by means of a pressurized gas or a mold filling device for molding by means of a liquid filling substance to remain in the containers (12).

## Revendications

1. Dispositif de thermorégulation (2) pour le conditionnement thermique de préformes (10) en matière thermoplastique en vue d'un formage ultérieur, comprenant un dispositif de transport selon le principe du plateau tournant pour le transport des préformes (10) le long d'un parcours de transport, le parcours de transport présentant au moins un tronçon avec deux allées de transport adjacentes pour le transport des préformes (10) en deux rangées adjacentes, de sorte que chaque préforme (10) peut être affectée à l'une des deux allées de transport (32, 34), le dispositif de thermorégulation (2) présentant en outre des éléments chauffants (36) disposés entre les allées de transport (32, 34) pour chauffer les préformes (10), les éléments chauffants (36) étant disposés entre les allées de transport (32, 34) de telle sorte que chaque élément chauffant (36) agit sur des préformes (10) dans les deux allées de transport (32, 34),
**caractérisé en ce que**
le dispositif de thermorégulation (2) présente au moins un dispositif de compensation (22, 22', 23, 24) pour compenser les différences de thermorégulation entre les préformes (10) affectées aux deux allées de transport (32, 34), qui agit en thermorégulant exclusivement ou plus fortement les préformes (10) affectées à l'une des deux allées de transport (32, 34).

2. Dispositif de thermorégulation (2) selon la revendication 1,
**caractérisé en ce que**
la puissance de thermorégulation du dispositif de compensation (22, 22', 23, 24) peut être réglée et/ou commandée et/ou régulée séparément.

3. Dispositif de thermorégulation (2) selon la revendication 1 ou 2,
**caractérisé en ce que**
le dispositif de compensation comprend des moyens de mise à disposition d'un fluide de refroidissement pour refroidir au moins les préformes (10) affectées à l'une des deux allées de transport (32, 34), les moyens de mise à disposition comprenant une voie d'écoulement (40) avec au moins une sortie (44, 54) dirigée vers les préformes (10) pour soumettre les préformes (10) au fluide de refroidissement.

4. Dispositif de thermorégulation (2) selon la revendication 3,
**caractérisé en ce que**
la sortie (44, 54) est disposée à côté de l'une des deux allées de transport (32, 34), le dispositif de compensation (22, 22', 23, 24) présentant dans la zone de la sortie de préférence un dispositif de séparation (48) disposé entre les allées de transport (32, 34) pour abriter l'autre allée de transport (34, 32) du fluide de refroidissement.

5. Dispositif de thermorégulation (2) selon la revendication 3 ou 4,
**caractérisé en ce que**
les moyens de mise à disposition comprennent une vanne (52) dans le trajet d'écoulement, qui peut être synchronisée avec le dispositif de transport pour soumettre au fluide de refroidissement chaque préforme (10) transportée devant la sortie en fonction de l'allée de transport (32, 34) qui lui est affectée.

6. Dispositif de thermorégulation (2) selon l'une des revendications 1 à 5,
**caractérisé en ce que**
le dispositif de compensation (22, 22', 23, 24) comprend des éléments chauffants (36).

7. Dispositif de thermorégulation (2) selon la revendication 6,
**caractérisé en ce que**
les éléments chauffants (36) du dispositif de compensation (22, 22', 23, 24) sont disposés à des distances différentes des préformes (10) dans les deux allées de transport (32, 34).

8. Dispositif de thermorégulation (2) selon la revendication 6 ou 7,
**caractérisé en ce que**
les éléments chauffants (36) du dispositif de compensation (22, 22', 23, 24) sont au moins partiellement masqués en direction de l'une des deux allées de transport (32, 34), en particulier au moyen d'un revêtement de masquage (37) des éléments chauffants (36) et/ou au moyen d'un dispositif de masquage (30, 39) disposé entre les éléments chauffants (36) et l'allée de transport (32, 34) concernée.

9. Dispositif de thermorégulation (2) selon l'une des revendications 1 à 8,
**caractérisé en ce que**
le dispositif de compensation (22, 22', 23, 24) comprend un dispositif de transport supplémentaire (24) exclusivement pour les préformes (10) affectées à l'une des deux allées de transport (32, 34), de sorte que le parcours de transport pour ces préformes (10) est rallongé par rapport aux préformes (10) affectées à l'autre allée de transport (32, 34).

10. Dispositif de thermorégulation (2) selon l'une des revendications 1 à 9,
**caractérisé en ce que**
le dispositif de thermorégulation (2) présente deux dispositifs de compensation (22, 22', 23, 24), dont l'un des dispositifs de compensation (22, 22', 23, 24) agit en thermorégulant exclusivement ou plus fortement les préformes (32, 34) affectées à l'une des allées de transport (32, 34) et l'autre dispositif de compensation (22, 22', 23, 24) agit en thermorégulant exclusivement ou plus fortement les préformes (10) affectées à l'autre allée de transport (32, 34), la puissance de thermorégulation des deux dispositifs de compensation (22, 22', 23, 24) étant réglable notamment individuellement.

11. Machine de fabrication de récipients (1) pour la fabrication de récipients (12) à partir de préformes (10), comprenant un dispositif de thermorégulation (2) pour le conditionnement thermique de préformes (10) en matière thermoplastique selon l'une des revendications 1 à 10, ainsi qu'un dispositif de formage (3) pour le formage des préformes (10) conditionnées thermiquement en récipients (12), le dispositif de formage (3) étant notamment un dispositif de moulage par soufflage pour le formage au moyen d'un gaz sous pression ou un dispositif de remplissage de moule pour le formage au moyen d'un matériau de remplissage liquide restant dans les récipients (12).
